# FASCICULE DE BREVET EUROPEEN

(11) **EP 3 320 602 B1**
(45) Date de publication et mention de la délivrance du brevet: **24.08.2022**
(21) Numéro de dépôt: 16745795.1
(22) Date de dépôt: 07.07.2016
(51) Int. Cl.: H02K 5/173, H02K 9/19

(54) **MACHINE ELECTRIQUE TOURNANTE MUNIE D'UN RESERVOIR DE LUBRIFIANT POUR LA LUBRIFICATION D'UN ROULEMENT ET LE REFROIDISSEMENT DE LA MACHINE**
ROTIERENDE ELEKTRISCHE MASCHINE MIT EINEM SCHMIERMITTELRESERVOIR ZUR SCHMIERUNG EINES WÄLZLAGERS UND ZUR KÜHLUNG DER MASCHINE
ROTARY ELECTRIC MACHINE PROVIDED WITH A RESERVOIR OF LUBRICANT FOR LUBRICATING A ROLLING BEARING AND FOR COOLING THE MACHINE

(30) Priorité: 10.07.2015 FR 1556541
(43) Date de publication de la demande: 16.05.2018
(73) Titulaire: Valeo Equipements Electriques Moteur, 94046 Créteil Cedex (FR)
(72) Inventeur: ROUIS, Oussama, 94000 Creteil (FR); LEDIEU, Cédric, 94160 Saint-Mande (FR); LABROSSE, Jean-Claude, 94220 Charenton Le Pont (FR)
(74) Mandataire: Valeo Powertrain Systems
(86) Numéro de dépôt international: PCT/FR2016/051723
(87) Numéro de publication internationale: WO 2017/009546

(56) Documents cités:
- WO-A1-2014/054155
- FR-A1- 2 740 853
- FR-A1- 2 898 739
- GB-A- 903 351
- US-A- 6 087 744
- US-A1- 2010 175 933
- US-A1- 2010 283 339

## Description

La présente invention porte sur une machine électrique tournante munie d'un réservoir de lubrifiant pour la lubrification d'un roulement. L'invention trouve une application particulièrement avantageuse, mais non exclusive, avec les machines électriques réversibles de forte puissance pouvant fonctionner en mode alternateur et en mode moteur.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le rotor comporte un corps formé par un empilage de feuilles de tôles maintenues sous forme de paquet au moyen d'un système de fixation adapté, tel que des rivets traversant axialement le corps du rotor de part en part. Le rotor comporte des pôles formés par exemple par des aimants permanents logés dans des cavités ménagées dans la masse magnétique du rotor, comme cela est décrit par exemple dans le document EP0803962. Alternativement, dans une architecture dite à pôles "saillants", les pôles sont formés par des bobines enroulées autour de bras du rotor. D'autres exemple d'art antérieur peuvent être trouvés dans les documents US2010175933 et FR2740853.

Par ailleurs, le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage. Ces enroulements sont des enroulements polyphasés connectés en étoile ou en triangle dont les sorties sont reliées à un pont redresseur de tension.

Dans le cadre de l'hybridation des véhicules automobiles, une machine électrique tournante réversible de forte puissance peut être intégrée dans différents éléments de la chaîne de traction. La machine peut ainsi être accouplée à une boîte de vitesses, un embrayage, ou un différentiel du véhicule. La machine électrique est alors apte à fonctionner dans un mode alternateur pour fournir notamment de l'énergie à la batterie et au réseau de bord du véhicule, et dans un mode moteur, non seulement pour assurer le démarrage du moteur thermique, mais également pour participer à la traction du véhicule seule ou en combinaison avec le moteur thermique. L'invention vise à perfectionner ce type de machine électrique. A cet effet, l'invention propose une machine électrique tournante, selon l'objet de la revendication 1.

L'invention permet ainsi de garantir une lubrification et un refroidissement efficace du roulement quelles que soient les conditions de fonctionnement de la machine électrique, notamment par gravité lorsque la machine est montée dans un véhicule.

La machine peut être agencée pour qu'une portion du roulement puisse être en contact fluidique avec le lubrifiant du réservoir. Le premier rebord est configuré pour permettre l'écoulement du lubrifiant depuis le réservoir vers le roulement, notamment par gravité, lorsque la machine est montée dans un véhicule.

Selon une réalisation, ledit réservoir est configuré de façon à favoriser un écoulement d'un surplus de lubrifiant en direction dudit roulement lorsque ledit réservoir est plein. La machine peut ainsi être agencée pour que le lubrifiant du réservoir se déverse hors de celui-ci uniquement par débordement.

Selon une réalisation, ledit premier rebord formé dans ledit carter présentant une première hauteur par rapport audit fond, ledit deuxième rebord formé par la bague externe dudit roulement présentant une deuxième hauteur par rapport audit fond, ladite première hauteur est supérieure à ladite deuxième hauteur. Le fond s'étend suivant sa largeur suivant une direction de l'axe de la machine. Dans le cas où le fond est incliné vers le roulement en sorte que le réservoir présente par exemple une forme tronconique. on considérera une référence commune de même niveau pour la mesure des deux hauteurs.

Selon une réalisation, ledit roulement est dépourvu de flasque. Une telle caractéristique permet l'écoulement du lubrifiant à travers le roulement.

Selon une réalisation, ledit roulement est dégraissé.

Selon une réalisation, ledit arbre comporte au moins une sortie de lubrifiant agencée pour remplir ledit réservoir.

Selon une réalisation, ladite sortie de lubrifiant débouche en face dudit réservoir.

Selon une réalisation, lorsque ladite machine électrique est montée dans un véhicule automobile, ledit réservoir est positionné dans une partie basse de ladite machine électrique pour que ledit lubrifiant puisse être stocké dans ledit réservoir par gravité.

Selon une réalisation, ledit carter comporte un élément de guidage axial de ladite machine électrique lors de son insertion dans une enveloppe d'un élément hôte destiné à être accouplé mécaniquement avec ladite machine électrique, et un élément de centrage de ladite machine électrique par rapport à ladite enveloppe dudit élément hôte.

Selon une réalisation, ledit arbre présente:
- à sa première extrémité un organe d'accouplement pour l'accouplement de ladite machine électrique avec un élément hôte, et
- à sa deuxième extrémité une portion de réglage permettant un entraînement en rotation dudit arbre lors d'une insertion de ladite machine électrique dans une enveloppe dudit élément hôte.

Selon une réalisation, ledit carter comporte un organe d'indexation agencé pour permettre l'indexation angulaire de ladite machine électrique dans une position prédéterminée lors de son insertion dans une enveloppe d'un élément hôte destiné à être accouplé avec ladite machine électrique.

Selon une réalisation, le rotor est monté sur l'arbre.

Selon une réalisation, le stator entoure le rotor.

Selon une réalisation, ladite machine électrique tournante comporte un stator, une pluralité de canaux s'étendant entre ledit stator et ledit carter, et en ce que ledit carter comporte une pluralité d'ouvertures débouchant chacune par une de leurs extrémités à l'extérieur de ladite machine électrique et par une autre de leurs extrémités dans un canal.

Selon une réalisation, une puissance de la machine pourra être comprise entre 10kW et 50kW.

Selon une réalisation, un diamètre extérieur du rotor est compris entre 8 et 14 cm. notamment entre 10 et 12 cm. et vaut de préférence 11 cm.

Selon une réalisation, un diamètre extérieur du stator est compris entre 10 et 20 cm. notamment entre 13 et 18 cm. et vaut de préférence 15 cm.

Selon une réalisation, ledit circuit de refroidissement est agencé pour permettre l'écoulement d'un liquide de refroidissement entre le carter et le stator.

Selon une réalisation, ledit circuit de refroidissement est agencé pour permettre l'écoulement d'un liquide de refroidissement dans un alésage axial réalisé dans l'arbre.

L'invention a également pour objet un ensemble caractérisé en ce qu'il comporte une enveloppe d'un élément hôte et une machine électrique tournante telle que précédemment définie insérée dans ladite enveloppe selon la revendication 13.

Selon une réalisation, la machine comporte un pignon destiné à engrener avec un pignon de l'élément hôte.

Selon une réalisation, l'élément hôte est un élément d'une chaîne de traction d'un véhicule automobile, par exemple une boîte de vitesses, ou un différentiel, ou un embrayage.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe longitudinale d'une machine électrique tournante selon la présente invention;
La figure 2 est une vue en coupe longitudinale d'une machine électrique tournante selon la présente invention sans les parties actives installée à l'intérieur d'un élément hôte;
Les figures 3a et 3b représentent des vues en perspective de la machine électrique tournante selon la présente invention suivant différents angles;
La figure 4 est une vue de face de la machine électrique tournante selon la présente invention;
La figure 5 est une vue en coupe partielle de la machine électrique tournante selon la présente invention;
La figure 6 est une vue en perspective montrant le palier arrière de la machine électrique tournante selon la présente invention;
Les figures 7a et 7b sont respectivement des vues en couple longitudinale et en perspective illustrant le sens de circulation du liquide de refroidissement à l'intérieur de la machine électrique tournante selon la présente invention.

Les éléments identiques, similaires, ou analogues conservent la même référence d'une figure à l'autre. Dans la suite de la description, on considère qu'un élément "avant" est situé du côté de l'organe d'accouplement de la machine, tel qu'un pignon ou une poulie, avec l'élément hôte et qu'un élément "arrière" est situé du côté opposé.

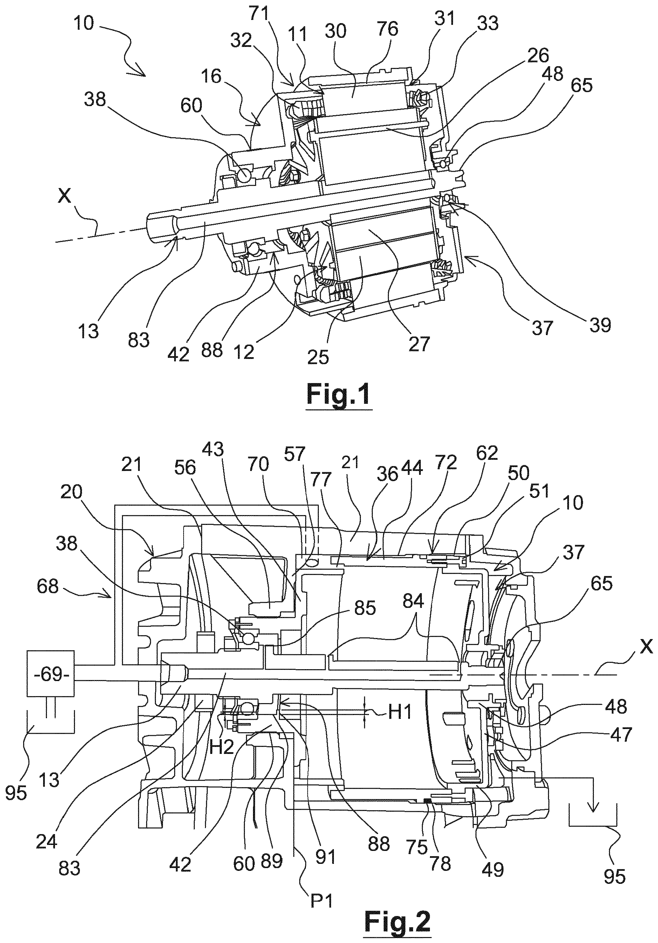

La figure 1 montre une machine électrique tournante 10 comportant un stator polyphasé 11 entourant un rotor 12 d'axe X monté sur un arbre 13. Le stator 11 est porté par un carter 16 configuré pour porter à rotation l'arbre 13. Le stator 11 entoure le rotor 12 avec présence d'un entrefer entre la périphérie interne du stator 11 et la périphérie externe du rotor 12.

Cette machine électrique 10 est destinée à être installée à l'intérieur d'une enveloppe 21 d'un élément hôte 20 visible en figure 2 appartenant à une chaîne de traction de véhicule automobile. L'élément hôte 20 destiné à être accouplé mécaniquement avec la machine électrique 10 pourra par exemple prendre la forme d'un embrayage, d'une boîte de vitesses, ou d'un différentiel. A cet effet, l'arbre 13 porte à une de ses extrémités un organe d'accouplement 24, tel qu'un pignon, destiné à engrener avec un pignon correspondant (non représenté) de l'élément hôte 20 afin d'assurer une transmission de couple entre les deux éléments. Le pignon 24 pourra être un pignon rapporté monté sur l'arbre 13 ou un pignon d'un autre type. En variante, l'organe d'accouplement 24 pourra consister en une poulie destinée à coopérer avec une courroie.

La machine 10 est apte à fonctionner dans un mode alternateur pour fournir notamment de l'énergie à la batterie et au réseau de bord du véhicule, et dans un mode moteur pour participer à la traction du véhicule seule ou en combinaison avec le moteur thermique.

Plus précisément, le rotor 12 comporte un corps 25 formé par un empilage de feuilles de tôles. Ces feuilles de tôles sont maintenues sous forme de paquet de tôles au moyen d'un système de fixation 26 adapté, tel que des rivets traversant axialement le rotor 12 de part en part. Des aimants permanents 27 sont implantés dans des ouvertures du corps. Les aimants 27 pourront être en terre rare ou en ferrite selon les applications et la puissance recherchée de la machine 10. Alternativement, les pôles du rotor 12 pourront être formés par des bobines.

Par ailleurs, le stator 11 comporte un corps 30 en forme de paquet de tôles doté d'encoches, par exemple du type semi-fermées, équipées d'isolant d'encoches pour le montage du bobinage 31 du stator 11. Le bobinage 31 comporte un ensemble d'enroulements de phase traversant les encoches du corps du stator 11 et formant des chignons avant 32 et arrière 33 s'étendant en saillie de part et d'autre du corps 30 du stator 11. Les enroulements de phase sont obtenus ici à partir d'éléments conducteurs en forme d'épingles reliées entre elles par exemple par soudage. Ces enroulements sont par exemple des enroulements triphasés connectés en une ou plusieurs étoiles ou bien en un ou plusieurs triangles. Les sorties des enrouements de phase sont reliées à un pont commutateur et/ou redresseur et/ou à un onduleur comportant des diodes ou des transistors du type MOSFET, notamment lorsqu'il s'agit d'une machine 10 réversible.

Le carter 16 comporte des paliers avant 36 et arrière 37 assemblés ensemble. Les paliers 36 et 37 sont de forme creuse et portent chacun en leur centre, un roulement à billes 38, 39 pour le montage à rotation de l'arbre 13. Alternativement, le roulement est un roulement magnétique. Plus précisément, le palier avant 36 comprend un nez 42 s'étendant en saillie par rapport à une paroi transversale 43. Une paroi 44 de forme cylindrique s'étend depuis la périphérie externe de la paroi transversale 43. Par ailleurs, le palier arrière 37 comporte une paroi transversale 47 comportant un trou traversant en son centre pour autoriser le passage de l'arbre 13 et munie d'une portée annulaire 48 destinée à supporter la bague externe du roulement arrière 39. Le palier arrière 37 comporte également une paroi cylindrique 49 s'étendant depuis une périphérie externe de la paroi transversale 43.

Le palier arrière 37 est fixé au palier avant 36 au moyen d'organes de fixation 51, tels que des vis ou des rivets, traversant des ouvertures réalisées dans un rebord annulaire 50 issu de la paroi 49 pour coopérer avec des alésages ménagés dans l'épaisseur de la paroi cylindrique 44 du palier avant 36 (cf. figure 2).

En l'occurrence, le nez 42 est destiné à coopérer avec un manchon 56 creux de forme correspondante issu d'une paroi 57, notamment transversale interne, de l'enveloppe 21. Le nez 42 forme un élément de guidage axial de la machine 10 par rapport à l'élément hôte 20, lors de son insertion à l'intérieur du manchon 56. Le positionnement axial de la machine 10 à l'intérieur de l'enveloppe 21 est contrôlé par la surface externe de la paroi transversale 43 du palier avant 36 constituant une butée axiale destinée à venir en appui contre la paroi transversale 57 correspondante de l'enveloppe 21. La surface formant butée est contenue dans un plan P1 perpendiculaire par rapport à l'axe X de la machine 10.

En outre, le nez 42 forme un élément de centrage de la machine 10 par rapport à l'enveloppe 21 de l'élément hôte 20. A cet effet, le nez 42 comporte en périphérie externe une surface ajustée 60 par rapport au manchon 56, par exemple par un ajustement compris entre 1/100 et 3/100 de millimètre, par exemple de type H7g6. Une section du nez 42 perpendiculaire à l'axe du carter 16 (correspondant à l'axe X) coupant la surface ajustée 60 présente une surface supérieure strictement à une surface d'une autre section du nez 42.

Le nez 42 comporte une paroi de forme cylindrique délimitant un espace autorisant le passage de l'arbre 13. Le nez 42 porte en outre la bague externe du roulement avant 38 coopérant avec une surface de portée correspondante ménagée dans la périphérie interne du nez 42. En outre, la surface de la plus grande section du nez 42 est inférieure strictement à toute surface d'une section de la machine 10 contenue dans un plan perpendiculaire à l'axe X de la machine 10 coupant le stator 11. Autrement dit, le plus grand diamètre externe du nez 42 situé au niveau de la surface ajustée 60 est inférieur au diamètre externe de toute autre partie du palier avant 36 ou du palier arrière 37.

En variante, les fonctions de guidage et de centrage la machine 10 sont dissociées et réalisées par deux éléments distincts.

Une deuxième portion 62 du palier avant 36 assure également le centrage de la machine 10 par rapport à l'enveloppe 21. En l'occurrence, cette deuxième portion 62 est constituée par une partie de la paroi cylindrique 44 du palier avant 36 située au niveau de la liaison entre les deux paliers 36, 37. Cette portion 62 comporte une surface ajustée par rapport à une face cylindrique interne correspondante de l'enveloppe 21, par exemple par un ajustement compris entre 1/100 et 3/100 de millimètre, par exemple de type H7g6.

Ainsi, en se déplaçant depuis l'extrémité avant vers l'extrémité arrière de la machine 10, on rencontre successivement le nez 42 dans lequel est monté le roulement avant 38, le chignon avant 32, une extrémité axiale avant du stator 11 et la deuxième portion de centrage 62, puis le roulement arrière 39.

L'arbre 13 comporte dans sa partie centrale des cannelures pour son emmanchement à force à l'intérieur de l'alésage central du corps de rotor 25. En outre, du côté de l'extrémité opposée de l'organe d'accouplement 24, une portion de réglage 65 permet un entraînement en rotation de l'arbre 13 lors de l'insertion de la machine 10 dans l'enveloppe 21. On facilite ainsi l'accouplement de la machine 10 avec l'élément hôte 20 en permettant l'insertion des dents du pignon 24 porté par l'arbre 13 entre les espaces des dents du pignon correspondant de l'élément hôte 20. La portion de réglage 65 comporte par exemple au moins deux méplats destinés à coopérer avec un outil de forme correspondante. Cet outil pourra être manipulé manuellement par un opérateur ou, le cas échéant, automatiquement par un robot en chaîne de montage.

Par ailleurs, comme on peut le voir sur la figure 2, la machine électrique 10 est refroidie au moyen d'un circuit de refroidissement 68 agencé pour permettre notamment l'écoulement d'un liquide de refroidissement, en l'occurrence de l'huile, entre le carter 16 et le corps de stator 30, dans la direction de l'axe X.

A cet effet, le circuit de refroidissement 68 comporte une pompe 69 permettant d'injecter du liquide de refroidissement dans une chambre de distribution 70. La chambre de distribution 70 de forme globalement annulaire est délimitée par une partie d'une face interne 72 de l'enveloppe 21 et une partie de la paroi 44 du palier avant 36.

Plus précisément, le palier avant 36 comporte, dans la paroi cylindrique 44, un décrochement périphérique 71 de diamètre réduit par rapport au reste de la paroi cylindrique 44. La chambre 70 est délimitée par la face externe de ce décrochement 71 ainsi que par une face interne en vis-à-vis de l'enveloppe 21. La chambre 70 se prolonge au-delà du décrochement 71 dans un espace annulaire délimité par la périphérie externe de la portion cylindrique du palier avant 36 et la face interne 72 de l'enveloppe 21.

La chambre 70 est fermée hermétiquement du côté de son extrémité arrière par un joint 75 positionné à l'intérieur d'une gorge 78 ménagée dans la périphérie externe du palier avant 36. Du côté de l'extrémité avant, la surface externe de la paroi transversale 43 vient en appui contre une surface plane correspondante de la paroi transversale 57 de l'enveloppe 21 pour assurer l'étanchéité de la chambre 70.

La chambre 70 est en communication avec une pluralité de canaux 76 (cf. figure 1) s'étendant axialement entre le stator 11 et le carter 16 pour le passage du liquide de refroidissement. Ces canaux 76 sont répartis angulairement de manière régulière sur la circonférence du stator 11. Dans un exemple de réalisation, ces canaux 76 sont formés par des rainures managées dans une périphérie externe du corps de stator 11 et fermées radialement par la face interne du carter 16.

Pour assurer la communication fluidique entre la chambre 70 et les canaux 76, le carter 16 comporte une pluralité d'ouvertures 77 débouchant chacune par une de leurs extrémités à l'extérieur de la machine 10 dans la chambre de distribution 70 et par une autre de leurs extrémités du côté des canaux 76. La pluralité d'ouvertures 77 est répartie angulairement suivant un pourtour du carter 16.

Une surface de la section des différentes ouvertures 77 varie en fonction d'une position angulaire des ouvertures 77, de sorte que le liquide de refroidissement circule dans chaque canal 76 avec sensiblement la même pression. Ainsi, plus on s'éloigne de la zone d'injection d'huile 80 à l'intérieur de la chambre 70, plus la surface des sections des différentes ouvertures 77 augmente. Ainsi, sur une ouverture angulaire d'au moins 100 degrés, notamment de 180 degrés, les ouvertures 77 présentent une section croissante.

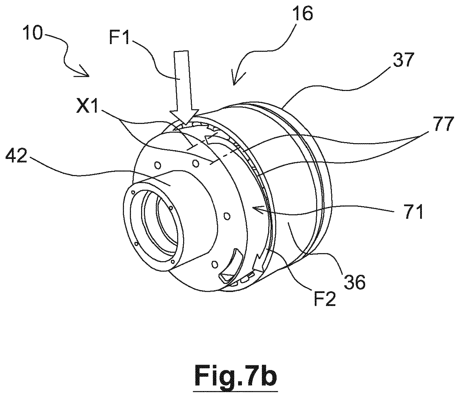

Les ouvertures 77 présentent chacune un axe X1 (cf. figure 7b) s'étendant parallèlement à l'axe X de la machine 10 correspondant à la direction d'écoulement du liquide de refroidissement à l'intérieur des canaux 76. De préférence, une direction d'injection d'huile suivant la flèche F1 est inclinée par rapport à l'axe X1 des ouvertures 77, par exemple d'un angle d'au moins 40°. Le liquide dans la chambre de distribution 70 est sous pression et circule de préférence à un débit compris entre 3 et 11 Litres/minute.

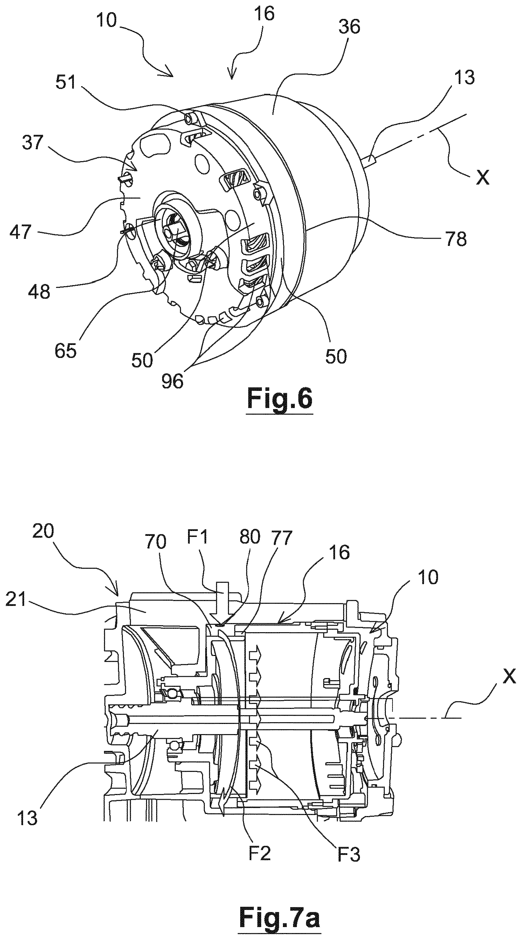

Ainsi, comme cela est illustré sur les figures 7a et 7b, l'huile injectée suivant la flèche F1 est réparties de manière homogène à l'intérieur des ouvertures 77 sur la circonférence de la chambre 77 suivant la flèche F2 pour s'écouler axialement à l'intérieur des canaux 76 suivant les flèches F3 sur la circonférence du stator 11 afin de refroidir efficacement la machine 10.

Comme on peut le voir sur la figure 1, l'huile circule également dans un alésage axial 83 réalisé dans l'arbre 13 du rotor 12 et dans des conduits 84 issus dudit alésage 83 débouchant vers les deux faces d'extrémité axiale du rotor 12. L'arbre 13 comporte également au moins une sortie d'huile 85 débouchant en face d'un réservoir 88 ménagé dans le carter 16.

Ce réservoir 88 est adapté à recevoir le liquide de refroidissement jouant également un rôle de lubrifiant pour assurer la lubrification du roulement avant 38. Lorsque la machine électrique 10 est montée dans un véhicule automobile, le réservoir 88 est positionné dans la partie basse de la machine 10 pour que le lubrifiant puisse être stocké dans le réservoir 88 par gravité. Le réservoir 88 est configuré de façon à favoriser l'écoulement du surplus de lubrifiant en direction du roulement 38 lorsque le réservoir 88 est plein.

Le réservoir 88 est délimité par un fond 89, un premier rebord 91 formé une collerette annulaire d'orientation radiale qui est issue d'une périphérie interne du nez 42, et un deuxième rebord formé par la bague externe du roulement 38. Une portion du roulement 38 est ainsi en contact fluidique avec le lubrifiant du réservoir 88, c'est-à-dire qu'au moins une partie du roulement 38 est en contact direct avec l'huile du réservoir 88. Le premier rebord 91 est configuré pour permettre l'écoulement du lubrifiant depuis le réservoir 88 vers le roulement 38, notamment par gravité, lorsque la machine 10 est montée dans l'élément hôte 20.

En l'occurrence, la hauteur H1 du premier rebord par rapport au fond 89 est supérieure à la hauteur H2 du deuxième rebord par rapport au fond 89. Le fond 89 est légèrement surélevé par rapport à la surface de portée de la bague interne du roulement 38 et s'étend suivant sa largeur suivant une direction de l'axe X de la machine 10. Le fond 89 s'étend suivant sa largeur suivant une direction de l'axe X de la machine. Dans le cas où le fond 89 est incliné vers le roulement 38 en sorte que le réservoir 88 présente par exemple une forme tronconique, on considérera une référence commune de même niveau pour la mesure des deux hauteurs H1 et H2.

Afin de faciliter l'écoulement de l'huile à travers le roulement 38, le roulement 38 est dépourvu de flasque. En outre, le roulement 38 est de préférence préalablement dégraissé de manière à pouvoir être parcouru aisément par l'huile sans interférence avec la graisse qu'il contient par défaut et qui aura été retirée par précaution. Lorsque la machine 10 est montée dans le véhicule, le réservoir 88 est positionné dans une partie basse de la machine 10 pour que le lubrifiant puisse être stocké dans le réservoir 88 par gravité.

Le circuit de refroidissement 68 fonctionne en boucle fermée, de telle façon que l'huile est prélevée par la pompe 69 dans un réservoir externe 95 à la machine 10 et est récupérée après circulation dans la machine 10 dans ce réservoir 95.

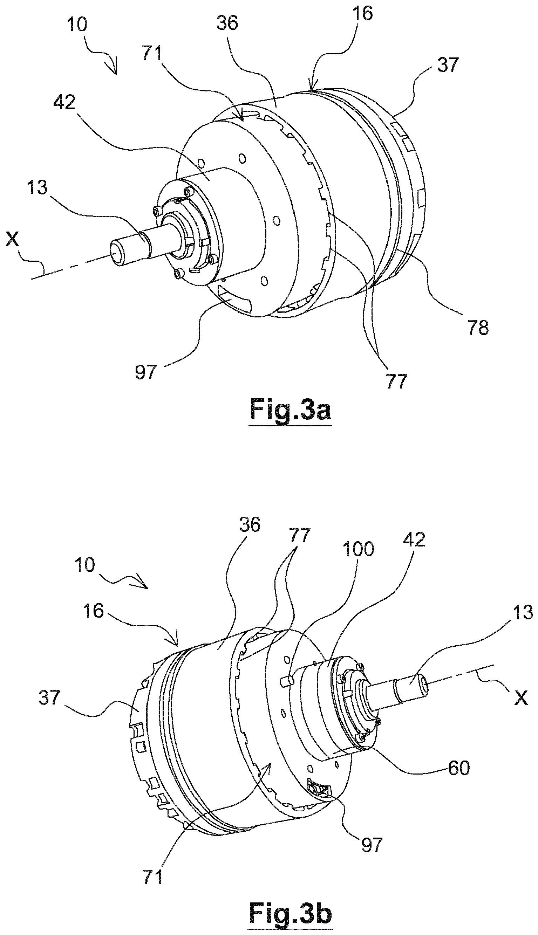

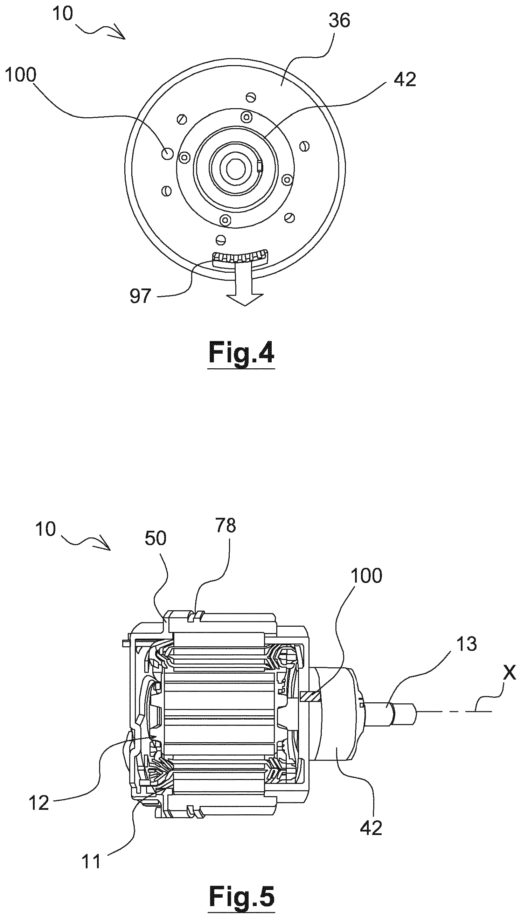

Pour autoriser l'huile à s'écouler dans le réservoir 95, le palier arrière 37 comporte des ouvertures 96 réparties sur sa circonférence et bien visibles sur la figure 6. Comme on peut le voir sur les figures 3a, 3b et 4, le palier avant 36 comporte également une ouverture 97 pour permettre une sortie d'huile vers le réservoir 95.

Afin de s'assurer que l'ouverture 97 est en position basse pour permettre l'écoulement du liquide par gravité via la sortie 97, le carter 16 comporte un organe d'indexation 100 agencé pour permettre l'indexation angulaire de la machine 10 par rapport à l'enveloppe 21 lors de son insertion dans l'enveloppe 21.

Dans l'exemple de réalisation, l'organe d'indexation 100 montré sur les figures 3b, 4, et 5 est constitué par un plot réalisé sur la paroi transversale 43 du palier avant 36. Ce plot 100 est agencé pour venir s'insérer dans un alésage de forme correspondante de l'élément hôte 20. Le plot 100 pourra être de type rapporté par rapport au carter 16 ou alternativement, venir de matière avec le carter 16. Le plot 100 est en outre configuré pour permettre le blocage en rotation de la machine 10. Le plot 100 présente à cet effet une section apte à contribuer à résister à au moins une partie des efforts développés par la machine électrique 10 en fonctionnement.

En variante, le liquide de refroidissement jouant également le rôle de lubrifiant pourra prendre la forme d'une émulsion d'huile et d'eau.

Selon une réalisation, une puissance de la machine 10 pourra être comprise entre 10kW et 50kW. Un diamètre extérieur du rotor 12 est compris entre 8 et 14 cm, notamment entre 10 et 12 cm, et vaut de préférence 11 cm. Un diamètre extérieur du stator 11 est compris entre 10 et 20 cm, notamment entre 13 et 18 cm, et vaut de préférence 15 cm.

## Revendications

1. Machine électrique tournante (10), comportant,
- un stator (11),
- un rotor (12),
- un carter (16),
- un arbre (13), et
- au moins un roulement (38) monté entre ledit carter (16) et ledit arbre (13),
le carter (16) comportant un réservoir (88) configuré pour recevoir un lubrifiant destiné à la lubrification dudit roulement (38),
la machine (10) comportant un circuit de refroidissement (68) agencé pour permettre l'écoulement d'un liquide de refroidissement, par exemple une huile, pour refroidir le stator (11) et/ou le rotor (12),
ledit réservoir (88) étant délimité par un fond (89), un premier rebord (91) formé dans ledit carter (16) et un deuxième rebord formé par une bague externe dudit roulement (38).

2. Machine électrique tournante selon la revendication 1, **caractérisée en ce que** ledit réservoir (88) est configuré de façon à favoriser un écoulement d'un surplus de lubrifiant en direction dudit roulement (38) lorsque ledit réservoir (88) est plein, **en ce que** le premier rebord (91) est configuré pour permettre l'écoulement du lubrifiant depuis le réservoir 88 vers le roulement 38, par gravité.

3. Machine électrique tournante selon l'une des revendications 1 et 2, **caractérisée en ce que** ledit premier rebord (91) formé dans ledit carter (16) présentant une première hauteur (H1) par rapport audit fond (89), ledit deuxième rebord formé par la bague externe dudit roulement (38) présentant une deuxième hauteur (H2) par rapport audit fond (89), ladite première hauteur (H1) est supérieure à ladite deuxième hauteur (H2).

4. Machine électrique tournante selon l'une quelconque des revendications 1 à 3, **caractérisée en ce que** ledit roulement (38) est dépourvu de flasque.

5. Machine électrique tournante selon l'une quelconque des revendications 1 à 4, **caractérisée en ce que** ledit roulement (38) est dégraissé.

6. Machine électrique tournante selon l'une quelconque des revendications 1 à 5, **caractérisée en ce que** ledit arbre (13) comporte au moins une sortie de lubrifiant agencée pour remplir ledit réservoir (88).

7. Machine électrique tournante selon la revendication 6, **caractérisée en ce que** ladite sortie de lubrifiant (85) débouche en face dudit réservoir (88).

8. Machine électrique tournante selon l'une quelconque des revendications 1 à 7, **caractérisée en ce que**, lorsque ladite machine électrique (10) est montée dans un véhicule automobile, ledit réservoir (88) est positionné dans une partie basse de ladite machine électrique pour que ledit lubrifiant puisse être stocké dans ledit réservoir (88) par gravité.

9. Machine électrique tournante selon l'une quelconque des revendications 1 à 8, **caractérisée en ce que** ledit carter (16) comporte un élément de guidage axial (42) de ladite machine électrique (10) lors de son insertion dans une enveloppe (21) d'un élément hôte (20) destiné à être accouplé mécaniquement avec ladite machine électrique (10), et un élément de centrage (42, 62) de ladite machine électrique (10) par rapport à ladite enveloppe (21) dudit élément hôte (20).

10. Machine électrique tournante selon l'une quelconque des revendications 1 à 9, **caractérisée en ce que** ledit arbre (13) présente
- à sa première extrémité un organe d'accouplement (24) pour l'accouplement de ladite machine électrique (10) avec un élément hôte (20), et
- à sa deuxième extrémité une portion de réglage (65) permettant un entraînement en rotation dudit arbre (13) lors d'une insertion de ladite machine électrique (10) dans une enveloppe (21) dudit élément hôte (20).

11. Machine électrique tournante selon l'une quelconque des revendications 1 à 10, **caractérisée en ce que** ledit carter (16) comporte un organe d'indexation (100) agencé pour permettre l'indexation angulaire de ladite machine électrique (10) dans une position prédéterminée lors de son insertion dans une enveloppe (21) d'un élément hôte (20) destiné à être accouplé avec ladite machine électrique (10).

12. Machine électrique tournante selon l'une quelconque des revendications 1 à 11, **caractérisée en ce qu'**elle comporte une pluralité de canaux (76) s'étendant entre ledit stator (11) et ledit carter (16), et **en ce que** ledit carter (16) comporte une pluralité d'ouvertures (77) débouchant chacune par une de leurs extrémités à l'extérieur de ladite machine électrique (10) et par une autre de leurs extrémités dans un canal (76).

13. Ensemble **caractérisé en ce qu'**il comporte une enveloppe (21) d'un élément hôte (20) et une machine électrique tournante (10) telle que définie selon l'une quelconque des revendications précédentes insérée dans ladite enveloppe (21).

## Patentansprüche

1. Rotierende elektrische Maschine (10), welche umfasst:
- einen Stator (11),
- einen Rotor (12),
- ein Gehäuse (16),
- eine Welle (13) und
- wenigstens ein Wälzlager (38), das zwischen dem Gehäuse (16) und der Welle (13) angebracht ist,
wobei das Gehäuse (16) einen Behälter (88) umfasst, der dafür ausgelegt ist, ein Schmiermittel aufzunehmen, das zur Schmierung des Wälzlagers (38) bestimmt ist,
wobei die Maschine (10) einen Kühlkreislauf (68) umfasst, der dafür eingerichtet ist, das Fließen einer Kühlflüssigkeit, zum Beispiel eines Öls, zu ermöglichen, um den Stator (11) und/oder den Rotor (12) zu kühlen,
wobei der Behälter (88) von einem Boden (89), einer ersten Randleiste (91), die im Gehäuse (16) ausgebildet ist, und einer zweiten Randleiste, die von einem Außenring des Wälzlagers (38) gebildet wird, begrenzt wird.

2. Rotierende elektrische Maschine nach Anspruch 1, **dadurch gekennzeichnet, dass** der Behälter (88) so ausgebildet ist, dass er ein Fließen eines Überschusses an Schmiermittel in Richtung des Wälzlagers (38) begünstigt, wenn der Behälter (88) voll ist, und dadurch, dass die erste Randleiste (91) dazu ausgebildet ist, das Fließen des Schmiermittels aus dem Behälter (88) zum Wälzlager (38) im Schwerkraftfluss zu ermöglichen.

3. Rotierende elektrische Maschine nach einem der Ansprüche 1 und 2, **dadurch gekennzeichnet, dass**, wenn die erste Randleiste (91), die im Gehäuse (16) ausgebildet ist, eine erste Höhe (H1) in Bezug auf den Boden (89) aufweist und die zweite Randleiste, die vom Außenring des Wälzlagers (38) gebildet wird, eine zweite Höhe (H2) in Bezug auf den Boden (89) aufweist, die erste Höhe (H1) größer als die zweite Höhe (H2) ist.

4. Rotierende elektrische Maschine nach einem der Ansprüche 1 bis 3, **dadurch gekennzeichnet, dass** das Wälzlager (38) nicht mit einem Lagerschild versehen ist.

5. Rotierende elektrische Maschine nach einem der Ansprüche 1 bis 4, **dadurch gekennzeichnet, dass** das Wälzlager (38) entfettet ist.

6. Rotierende elektrische Maschine nach einem der Ansprüche 1 bis 5, **dadurch gekennzeichnet, dass** die Welle (13) wenigstens einen Schmiermittelausgang umfasst, der dafür eingerichtet ist, den Behälter (88) zu füllen.

7. Rotierende elektrische Maschine nach Anspruch 6, **dadurch gekennzeichnet, dass** der Schmiermittelausgang (85) gegenüber dem Behälter (88) mündet.

8. Rotierende elektrische Maschine nach einem der Ansprüche 1 bis 7, **dadurch gekennzeichnet, dass**, wenn die elektrische Maschine (10) in einem Kraftfahrzeug angebracht ist, der Behälter (88) in einem unteren Teil der elektrischen Maschine positioniert ist, damit das Schmiermittel durch Schwerkraft im Behälter (88) gespeichert werden kann.

9. Rotierende elektrische Maschine nach einem der Ansprüche 1 bis 8, **dadurch gekennzeichnet, dass** das Gehäuse (16) ein Element zur axialen Führung (42) der elektrischen Maschine (10) bei ihrer Einführung in eine Hülle (21) eines Aufnahmeelements (20) umfasst, das dazu bestimmt ist, mit der elektrischen Maschine (10) mechanisch gekoppelt zu werden, und ein Element zur Zentrierung (42, 62) der elektrischen Maschine (10) in Bezug auf die Hülle (21) des Aufnahmeelements (20).

10. Rotierende elektrische Maschine nach einem der Ansprüche 1 bis 9, **dadurch gekennzeichnet, dass** die Welle (13) aufweist:
- an ihrem ersten Ende ein Kopplungsorgan (24) zur Kopplung der elektrischen Maschine (10) mit einem Aufnahmeelement (20), und
- an ihrem zweiten Ende einen Einstellabschnitt (65), der einen Drehantrieb der Welle (13) bei einer Einführung der elektrischen Maschine (10) in eine Hülle (21) des Aufnahmeelements (20) ermöglicht.

11. Rotierende elektrische Maschine Rotierende elektrische Maschine nach einem der Ansprüche 1 bis 10, **dadurch gekennzeichnet, dass** das Gehäuse (16) ein Indexierungsorgan (100) umfasst, das dafür eingerichtet ist, die Winkelindexierung der elektrischen Maschine (10) in einer vorbestimmten Position bei ihrer Einführung in eine Hülle (21) eines Aufnahmeelements (20), das dazu bestimmt ist, mit der elektrischen Maschine (10) gekoppelt zu werden, zu ermöglichen.

12. Rotierende elektrische Maschine nach einem der Ansprüche 1 bis 11, **dadurch gekennzeichnet, dass** sie mehrere Kanäle (76) umfasst, die sich zwischen dem Stator (11) und dem Gehäuse (16) erstrecken, und dadurch, dass das Gehäuse (16) mehrere Öffnungen (77) umfasst, die jeweils mit einem ihrer Enden auf der Außenseite der elektrischen Maschine (10) und mit einem anderen ihrer Enden in einen Kanal (76) münden.

13. Anordnung, **dadurch gekennzeichnet, dass** sie eine Hülle (21) eines Aufnahmeelements (20) und eine rotierende elektrische Maschine (10), wie in einem der vorhergehenden Ansprüche definiert, die in die Hülle (21) eingeführt ist, umfasst.

## Claims

1. Rotary electric machine (10) having:
- a stator (11),
- a rotor (12),
- a casing (16),
- a shaft (13), and
- at least one rolling bearing (38) mounted between said casing (16) and said shaft (13),
the casing (16) having a reservoir (88) configured to receive a lubricant intended to lubricate said rolling bearing (38),
the machine (10) having a cooling circuit (68) designed to allow the flow of a cooling liquid, for example an oil, for cooling the stator (11) and/or the rotor (12), said reservoir (88) being delimited by a base (89), a first rim (91) formed in said casing (16) and a second rim formed by an external ring of said rolling bearing (38) .

2. Rotary electric machine according to Claim 1, **characterized in that** said reservoir (88) is configured so as to promote a flow of a surplus of lubricant in the direction of said rolling bearing (38) when said reservoir (88) is full, **in that** the first rim (91) is configured to allow the flow of the lubricant from the reservoir (88) towards the rolling bearing (38) by gravity.

3. Rotary electric machine according to either of Claims 1 and 2, **characterized in that** said first rim (91) formed in said casing (16) has a first height (H1) with respect to said base (89), and said second rim formed by the external ring of said rolling bearing (38) has a second height (H2) with respect to said base (89), said first height (H1) being greater than said second height (H2) .

4. Rotary electric machine according to any one of Claims 1 to 3, **characterized in that** said rolling bearing (38) has no flange.

5. Rotary electric machine according to any one of Claims 1 to 4, **characterized in that** said rolling bearing (38) is degreased.

6. Rotary electric machine according to any one of Claims 1 to 5, **characterized in that** said shaft (13) has at least one lubricant outlet designed to fill said reservoir (88).

7. Rotary electric machine according to Claim 6, **characterized in that** said lubricant outlet (85) opens out opposite said reservoir (88).

8. Rotary electric machine according to any one of Claims 1 to 7, **characterized in that**, when said electric machine (10) is mounted in a motor vehicle, said reservoir (88) is positioned in a lower part of said electric machine such that said lubricant can be stored in said reservoir (88) by gravity.

9. Rotary electric machine according to any one of Claims 1 to 8, **characterized in that** said casing (16) has an axial guiding element (42) for guiding said electric machine (10) upon its insertion into an enclosure (21) of a host element (20) intended to be mechanically coupled to said electric machine (10), and a centring element (42, 62) for centring said electric machine (10) with respect to said enclosure (21) of said host element (20) .

10. Rotary electric machine according to any one of Claims 1 to 9, **characterized in that** said shaft (13) has
- at its first end, a coupling member (24) for coupling said electric machine (10) to a host element (20), and
- at its second end, an adjusting portion (65) allowing said shaft (13) to be driven in rotation upon insertion of said electric machine (10) into an enclosure (21) of said host element (20).

11. Rotary electric machine according to any one of Claims 1 to 10, **characterized in that** said casing (16) has an indexing member (100) designed to allow angular indexing of said electric machine (10) in a predetermined position upon its insertion into an enclosure (21) of a host element (20) intended to be coupled to said electric machine (10).

12. Rotary electric machine according to any one of Claims 1 to 11, **characterized in that** it has a plurality of passages (76) extending between said stator (11) and said casing (16), and **in that** said casing (16) has a plurality of openings (77) each opening via one of their ends to the outside of said electric machine (10) and via another of their ends into a passage (76).

13. Assembly **characterized in that** it has an enclosure (21) of a host element (20) and a rotary electric machine (10) as defined in any one of the preceding claims inserted into said enclosure (21).
